Europäisches Patentamt

European Patent Office

Office européen des brevets

(19)

(11) Veröffentlichungsnummer : **0 058 656**
**B1**

(12) **EUROPÄISCHE PATENTSCHRIFT**

(45) Veröffentlichungstag der Patentschrift :
**07.11.84**

(21) Anmeldenummer : **82890017.5**

(22) Anmeldetag : **09.02.82**

(51) Int. Cl.³ : **B 01 D 29/14**, B 01 D 29/38

(54) **Filterapparat zur Abtrennung von Fest- und Schwebstoffen aus Flüssigkeiten.**

(30) Priorität : **16.02.81 AT 700/81**

(43) Veröffentlichungstag der Anmeldung :
**25.08.82 Patentblatt 82/34**

(45) Bekanntmachung des Hinweises auf die Patenterteilung : **07.11.84 Patentblatt 84/45**

(84) Benannte Vertragsstaaten :
**BE CH DE FR GB IT LI NL SE**

(56) Entgegenhaltungen :
**CH-A- 484 687**
**DE-C- 1 121 799**
**GB-A- 1 060 019**
**US-A- 3 994 810**
**US-A- 4 156 651**

(73) Patentinhaber : **Chemiefaser Lenzing Aktiengesellschaft**
**A-4860 Lenzing (AT)**

(72) Erfinder : **Klein, Walter**
**Siedlerweg 9**
**A-4860 Lenzing (AT)**

(74) Vertreter : **Wolfram, Gustav, Dipl.-Ing.**
**Schwindgasse 7 P.O. Box 205**
**A-1041 Wien (AT)**

EP 0 058 656 B1

## Beschreibung

Die Erfindung betrifft einen Filterapparat zur Abtrennung von Fest- und Schwebstoffen aus Flüssigkeiten, mit einem zylindrischen Gehäuse, einem darin koaxial eingebauten zylindrischen Filterkorb, der einen die zu filtrierende Flüssigkeit aufnehmenden Raum gegenüber einem äußeren, das Filtrat aufnehmenden Ringraum abgrenzt, und einer mittels eines Antriebes axial beweglichen Rückspülvorrichtung, die zwei in konstantem Abstand angeordnete Kolbenscheiben aufweist, wobei die Kolbenscheiben Kanäle aufweisen, die den äußeren Ringraum über Perforierungen des Filterkorbes mit einem Innenraum eines koaxial zum Filterkorb vorgesehenen Zentralrohres verbinden und die Kolbenscheiben über Dichtungen an der Innenfläche des Filterkorbes anliegen.

Filterapparate dieser Art werden u. a. zur Filtration von Viskose verwendet, um schwer filtrierbare Gelteilchen bzw. Rückstände abzutrennen. Dabei werden die abgetrennten Fest- bzw. Schmutzteilchen vom Filtermaterial zurückgehalten, und es ist notwendig, zur Reinigung des Filtermaterials nach Erreichen eines bestimmten Verschmutzungsgrades das Filtermaterial mit bereits filtrierter Flüssigkeit im Gegenstrom zu spülen, um es wieder durchgängig zu machen. Dieser Vorgang wird mit « Rückspülung » bezeichnet.

Die US-A-3 994 810 (korrespondierend zur DE-A-26 29 151) zeigt einen Filterapparat der eingangs beschriebenen Art, bei dem zwei radial ausgerichtete Kolbenscheiben mit dem Zentralrohr in fester Verbindung stehen, wobei das Zentralrohr und dadurch die Kolbenscheiben axial innerhalb des Filterkorbes hin- und herbewegt werden. Bei dieser bekannten Vorrichtung ist das axial bewegte Zentralrohr einseitig gelagert, was aufgrund des Gewichtes der Rückspülvorrichtung — da sich die Kolbenscheiben an der Trommelwandung abstützen — zu einer baldigen Abnützung und damit zu Leckverlusten führen kann. Ein weiterer Nachteil der bekannten Vorrichtung ist darin zu sehen, daß die einzelnen Filterelemente eine relativ große Menge an Rückspülflüssigkeit benötigen, zumal der Filterkorb zur Abstützung der Rückspülvorrichtung entsprechend stark dimensioniert sein muß. Weiters benötigt der Antrieb für die Rückspülvorrichtung viel Platz in axialer Richtung der Vorrichtung.

Aus der US-A-3 574 509 und der US-A-3 393 262 sind Filterapparate bekannt, bei denen der Filterkorb aus zwei koaxial angeordneten, Perforierungen aufweisenden Zylindern besteht, zwischen denen ein zylindrisches Drahtnetz gehalten ist. Die Perforierungen der beiden Zylinder müssen genau fluchten, weshalb die Konstruktion, insbesondere das Bohren der Löcher, sehr aufwendig ist. Die Rückspülung erfolgt bei diesem bekannten Apparat mit Hilfe eines um die Längsachse des Filterkorbes rotierbaren Armes, der an der Innenfläche des inneren Zylinders gleitet und einen Verbindungskanal zum Zentralrohr aufweist. Die Rotationsgeschwindigkeit wird in Abhängigkeit vom Verschmutzungsgrad des Drahtnetzes geregelt.

Nachteile solcher Apparate (US-A-3 574 509 und US-A-3 393 262) bestehen vor allem darin, daß zwischen der Innenwand des Filterkorbes und dem Arm ein die Rotation ermöglichender Spalt vorhanden sein muß, wodurch sich Leckverluste ergeben, welche unabhändig vom Feststoffgehalt der Flüssigkeit sind und mit sinkender Viskosität der Flüssigkeit steigen. Ein anderer Nachteil besteht darin, daß die Rückspülmenge infolge der Lochform und der erheblichen Wandstärke der beiden aneinanderliegenden Zylinder des Filterkorbes verhältnismäßig groß ist.

Die Erfindung stellt sich daher die Aufgabe, Leckverluste zu vermeiden, eine möglichst geringe Menge an Rückspülflüssigkeit in der Rückspülphase zu verwenden und eine zuverlässige Dichtung zwischen den Kolbenscheiben und dem Filterkorb zu schaffen. Weiterhin soll die vorhandene Filterfläche des Filterkorbes während des Filtrierens voll ausgenützt werden sowie durch eine vorteilhafte Dimensionierung der Perforierungen des Filterkorbes einerseits eine genügende Stabilität des Filterkorbes und andererseits eine bestmögliche Ausnutzung des Filtermaterials gewährleistet werden.

Die gestellte Aufgabe wird bei einem Filterapparat der eingangs definierten Art erfindungsgemäß dadurch gelöst,

— daß das Zentralrohr im zylindrischen Gehäuse fest angeordnet ist, so daß der die zu filtrierende Flüssigkeit aufnehmende Raum einen Ringraum bildet,

— daß die Kolbenschreiben über Dichtungen an der Außenfläche des Zentralrohres flüssigkeitdicht anliegen, sowie zur axialen Führung abgestützt sind, und

— daß der Antrieb direkt an mindestens einer der Kolbenscheiben angreift.

Vorteilhaft entspricht der Abstand, in dem die beiden Kolbenscheiben voneinander gehalten sind, etwa der halben Länge des Filterkorbes.

Zweckmäßig sind die Kolbenscheiben mit kontinuierlichem Vorschub angetrieben.

Vorzugsweise sind die Kolbenscheiben in eine Ruhestellung bewegbar, in der die Verbindung zwischen dem Ringraum II und dem Innenraum III des Zentralrohres durch nicht perforierte Mantelteile des Filterkorbes unterbrochen ist.

Entspricht der Abstand der beiden Kolbenscheiben voneinander der halben Länge des Filterkorbes, so muß lediglich in der Mitte des Filterkorbes und an dessen beiden Enden ein nicht perforierter Mantelteil von der Dicke einer Kolbenscheibe vorgesehen sein, wenn die Kolbenscheiben Ruhestellungen einnehmen, bei denen eine Kolbenscheibe jeweils an einem der beiden Enden des zylindrischen Filterkorbes zu liegen kommt.

Nach einer bevorzugten Ausführungsform ist die Rückspülphase und damit die Bewegung der Kolbenscheiben aus der Ruhestellung und entlang der Innenseite des Filterkorbes durch eine vorbestimmte Druckdifferenz zwischen äußerem Ringraum II und Ringraum I auslösbar.

Die Durchgängigkeit des Filtermaterials sinkt während des Filtrierens in zunehmendem Maße, wobei die Druckdifferenz zwischen Ringraum I und Ringraum II steigt. Wird der vorbestimmte Wert der Druckdifferenz erreicht, so beginnen sich die Kolbenscheiben aus ihrer Ruhestellung zu bewegen, bis sie eine weitere Ruhestellung erreicht haben. Werden die Kolbenscheiben mit gleichförmiger Geschwindigkeit vorgeschoben, so bleibt das Verhältnis zwischen der Menge an Rückspülflüssigkeit und der Menge an Filterrückstand während der Rückspülphase konstant.

Die Menge an Rückspülflüssigkeit wird durch die Vorschubgeschwindigkeit der Kolbenscheiben und somit durch die Verweilzeit der Kolbenscheiben über den Perforierungen des Filterkorbes, durch die Druckdifferenz zwischen Ringraum II und Innenraum III sowie durch die Viskosität der zu filtrierenden Flüssigkeit bestimmt.

Die Perforierungen des Filterkorbes vom Ringraum I zum äußeren Ringraum II sind vorteilhaft von innen nach außen divergierend ausgebildet, wobei das Verhältnis der Perforierungsdurchmesser an der Innen- und Außenseite des Filterkorbes etwa 1 : 2,25 beträgt.

Weiters befinden sich die Achsen der Perforierungen vorzugsweise in einem Abstand voneinander, der etwa dem 2,5-fachen von deren kleinen Durchmesser an der Innenseite des Filterkorbes entspricht.

Besonders zweckmäßig macht der Flächenanteil der Perforierungsöffnungen an der Außenseite des Filterkorbes 65 bis 80 % von dessen Gesamt-Mantelfläche aus.

Die Perforierungen können z. B. konische Bohrungen sein, sie können an der Außenseite des Filterkorbes, also auf der Seite des Filtermaterials, so eng aneinander gereiht werden, daß nur die kleinstmögliche Stützfläche verbleibt. An der Innenseite des Filterkorbes verbleibt durch die konische Ausbildung der Perforierungen genügend Stützmaterial, so daß die statische Stabilität des Filterkorbes sowie eine gute Gleitfläche für die Kolbenringe gewährleistet ist. Das Filtermaterial wird auf diese Weise optimal ausgenützt ; die erforderliche Menge an Rückspülflüssigkeit wird durch die konische Form der Perforierungen bzw. Bohrungen möglichst gering gehalten und der Verschleiß der Kolbenringe wird durch die gute Gleitfläche wesentlich vermindert.

Die Perforierungen können auch als zueinander parallel auf der Außenseite des Filterkorbes angeordnete Rillen mit dreieckigem, trapezförmigem oder halbkreisförmigem Profil ausgebildet sein, welche Rillen in gleichmäßigem Abstand voneinander Bohrungen zum Flüssigkeitsdurchtritt aufweisen.

Vorteilhaft entspricht die Wandstärke des Filterkorbes etwa dem 2,5-fachen Durchmesser der Perforierungen an der Innenseite des Filterkorbes.

Nach einer bevorzugten Ausführungsform des erfindungsgemäßen Filterapparates weisen die Kolbenscheiben Kolbenringe auf, die unter der Wirkung des Flüssigkeitsdifferenzdruckes zwischen den Ringräumen I und II bzw. zwischen Ringraum I und den Durchgangskanälen der Kolbenscheiben selbstnachstellend und -dichtend ausgebildet sind.

Die Kolbenringe sind vorzugsweise zwischen inneren und äußeren Halteteilen einer Kolbenscheibe gehaltert. Der Druck im Ringraum I ist höher als im Ringraum II und höher als in den Durchgangskanälen der Kolbenscheiben. Der im Ringraum I herrschende Druck wirkt jeweils auf zwei Flächen der Kolbenringe, wodurch diese an die Innenseite des Filterkorbes sowie an den auf der Seite des Durchgangskanales liegenden Halteteil angepreßt werden.

Zur besseren Anpassung an die Innenfläche des Filterkorbes sowie zum Ausgleich der verschleißbedingten Verringerung der Stärke der Kolbenringe sind letztere besonders zweckmäßig mit einer Stoßfuge ausgebildet ; die Stoßfuge ist dabei durch ein segmentförmiges Paßstück abgedeckt und die beiden Stoßenden der Kolbenringe sind unter Wirkung einer Federkraft voneinander im Abstand gehalten.

Auch auf das Paßstück wirkt die gleiche Druckdifferenz wie auf die Kolbenringe, so daß auch dort eine verschleißkompensierende, hydrostatische Abdichtung erfolgt. Durch die Wirkung der Federkraft bleiben die Kolbenringe auch dann an die Innenfläche des Filterkorbes angepreßt, wenn sich das Verbindungselement in Ruhestellung befindet.

Die Kolbenscheiben werden zweckmäßig durch ein Stützrohr, welches das Zentralrohr koaxial umgibt, im Abstand gehalten, wobei der Ringraum zwischen Zentralrohr und Stützrohr mit den Kanälen der Kolbenscheiben sowie mit dem Innenraum III des Zentralrohres in Verbindung steht.

Der Antrieb des Verbindungselementes erfolgt erfindungsgemäß insbesondere mittels einer exzentrisch den Ringraum I durchsetzenden, von einem Motor angetriebenen Spindel.

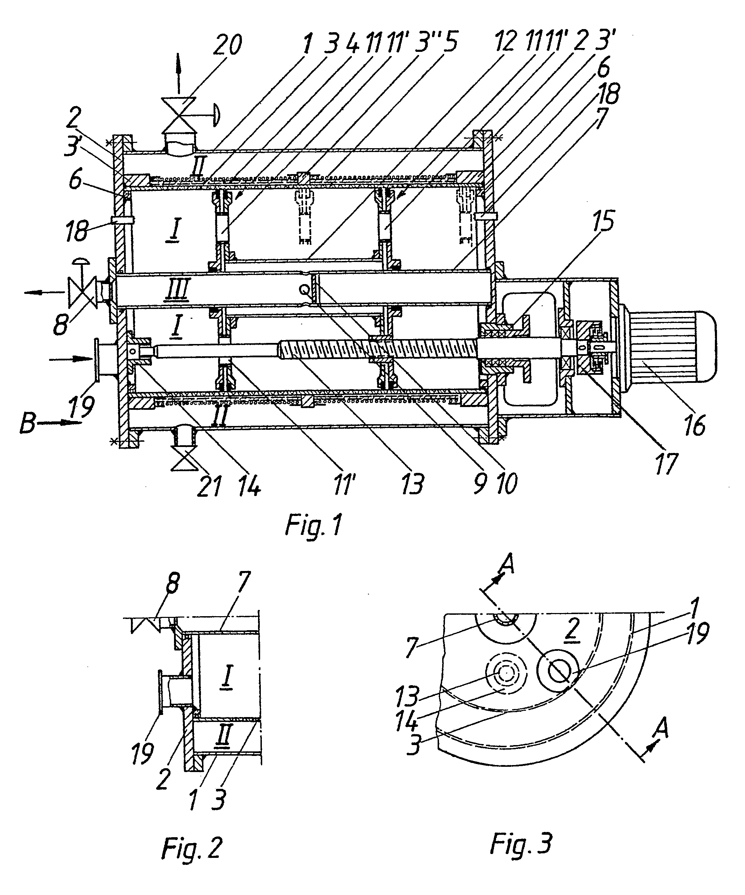

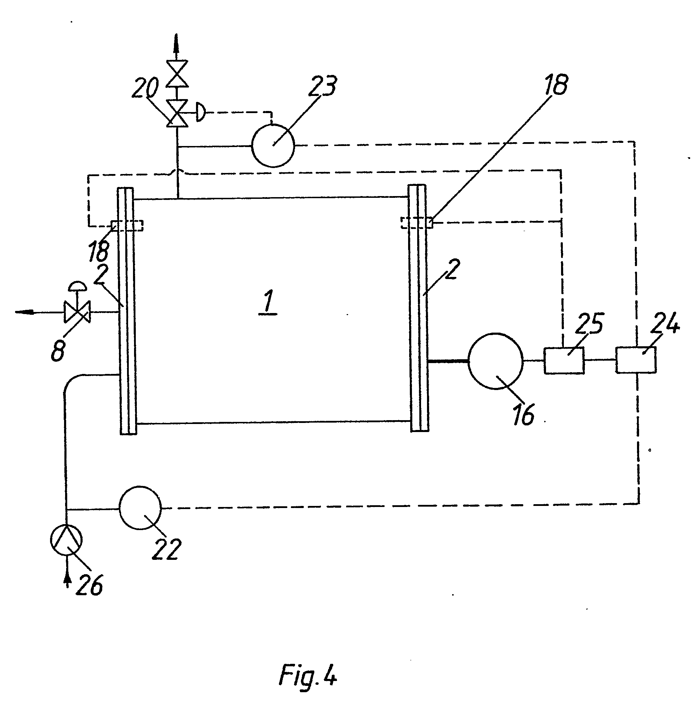

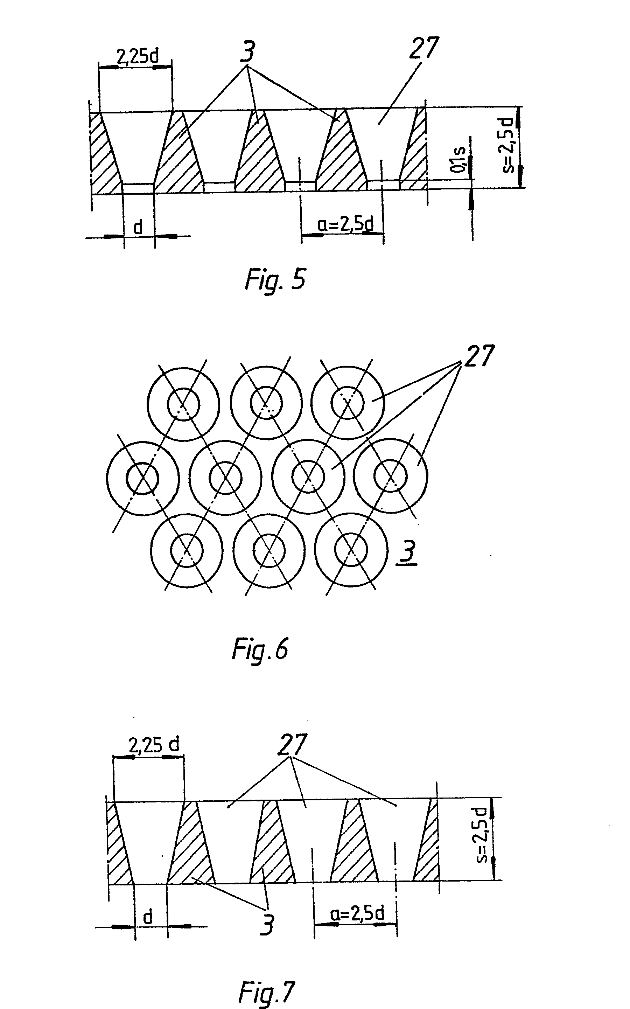

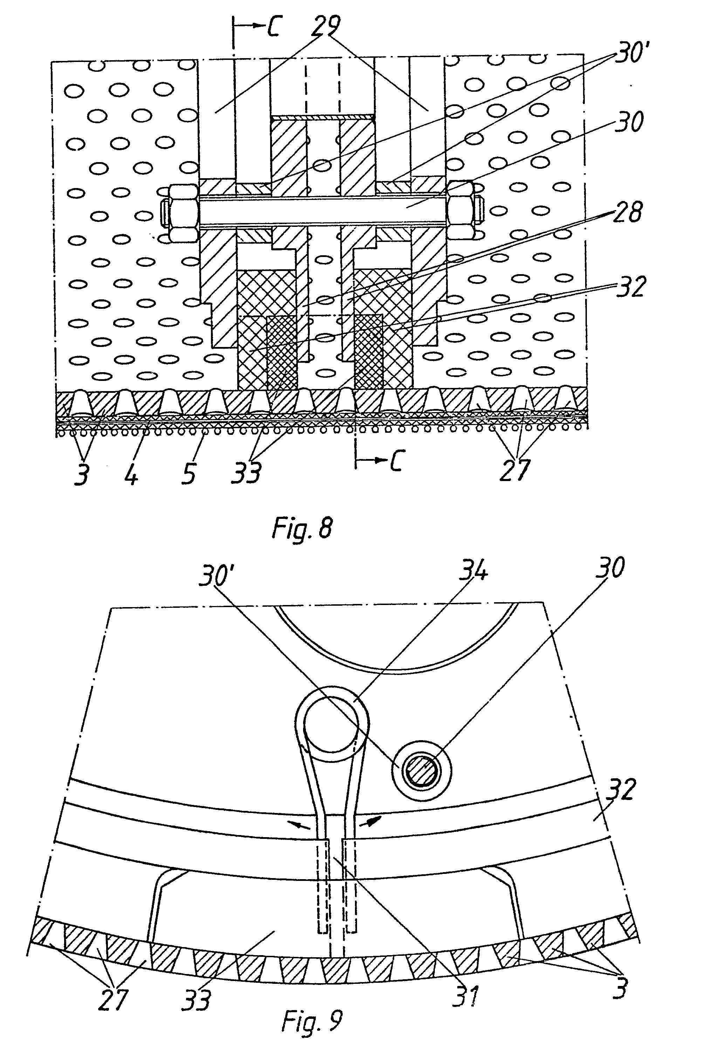

Die Erfindung wird im folgenden durch Zeichnungen näher erläutert, wobei in Fig. 1 eine Ausführungsform des Filterapparates im Schnitt dargestellt ist ; in Fig. 2 ist ein Teilschnitt entlang der Linie A-A der Fig. 3 gezeigt, wobei Fig. 3 eine Teilansicht des Apparates gemäß Fig. 1 aus Richtung B ist. In Fig. 4 ist schematisch eine Steuerschaltung für einen erfindungsgemäßen Filterapparat wiedergegeben. Die Fig. 5 und 7 zeigen einen Schnitt durch einen Filterkorb, wobei die Schnittebene durch dessen Längsachse verläuft, mit zweckmäßigen Ausbildungsarten der Perforierungen. Aus Fig. 6 ist eine Außenansicht eines Ausschnittes aus einem Filterkorb gemäß den Fig. 5 und 7 ersichtlich, wobei der zylindrische Filterkorb in eine Ebene aufgerollt ist. In Fig. 8 ist ein Teil eines Filterkorbes mit einer Kolbenscheibe vergrößert im Schnitt dargestellt. Fig. 9 zeigt einen Sektor der Ansicht der entlang C-C geschnittenen Anordnung gemäß Fig. 8.

In den Fig. 1, 2 und 3 ist mit 1 ein zylindrisches Gehäuse bezeichnet, welches an seinen Enden Gehäusedeckel 2 aufweist. Der perforierte Filterkorb 3 trennt den Ringraum I von einem äußeren Ringraum II ab und trägt auf seinem Außenmantel das Filtermaterial 4, welches durch einen äußeren Spannmantel 5 festgehalten ist. An der Innenseite der Gehäusedeckel 2 sind Führungsorgane 6 zur Zentrierung und Abdichtung des mit Verstärkungsringen 3' und 3" ausgestatteten Filterkorbes 3 vorgesehen. Das koaxial angeordnete Zentralrohr 7 wird durch entsprechende Ausnehmungen in den Gehäusedeckeln in Position gehalten und ist zur Ableitung der Rückspülflüssigkeit über das Ventil 8 mit Öffnungen 9 versehen. Ein fester Boden 10 dient zur Minimierung der Flüssigkeits-Leitungswege.

Das Zentralrohr dient auch zur exakten Führung von zwei allgemein mit 11 bezeichneten, Durchbrechungen 11' aufweisenden Kolbenscheiben, die durch ein Stützrohr 12, welches das Zentralrohr 7 koaxial umgibt, im Abstand gehalten werden. Die Kolbenscheiben können zwei Ruhestellungen einnehmen, u. zw. jeweils im Anschlag an die Gehäusedeckel 2. Die rechte Ruhestellung ist in Fig. 1 strichliert angedeutet. Zum Antrieb der Kolbenscheiben ist eine exzentrisch angeordnete Gewindespindel 13 vorgesehen, welche den Ringraum I durchsetzt und deren Ende von der Lagerung 14 abgestützt wird. Die Spindel 13 greift in eine Gewinde in einer der Kolbenschreiben 11 ein und ist durch den Gehäusedeckel 2 geführt, wobei die Abdichtung mittels einer Stopfbüchsendichtung 15 erfolgt. Die Spindel wird durch einen Motor 16 über eine zur mechanischen Absicherung vorgesehene Lamellenrutschkupplung 17 angetrieben. Elektrische Endschalter 18 sind über nicht dargestellte Leitungen mit dem Motor 16 verbunden. An einem der Gehäusedeckel 2 ist ein Stutzen 19 für den Zulauf der zu filtrierenden Flüssigkeit angeordnet. Auf dem zylindrischen Gehäuse sind ein Auslaßventil 20 für das Filtrat sowie in Entleerungsventil 21 angeflanscht.

Die zu filtrierende Flüssigkeit wird über den Stutzen 19 und die Durchbrechungen 11' dem Ringraum I des Filterapparates zugeführt. Die Flüssigkeit gelangt durch die Perforierungen des Filterkorbes 3 zum Filtermaterial 4. Die Feststoffanteile werden vom Filtermaterial zurückgehalten, die gereinigte Flüssigkeit wird durch das Filtermaterial in den Ringraum II gedrückt und von dort über ein einstellbares Druckregel- bzw. Auslaßventil 20 abgeführt.

Bei dem in Fig. 1 dargestellten Filterapparat entspricht der Abstand der beiden Kolbenscheiben voneinander der halben Länge des Filterkorbes. In jeder der beiden Ruhestellungen befindet sich eine Kolbenscheibe über dem nicht perforierten Mittelteil des Filterkorbes.

Im Verlauf der Filtration wird das Filtermaterial in zunehmendem Maß durch die abfiltrierten Schmutz- bzw. Feststoffteilchen « belegt » und dadurch weniger durchgängig ; dabei steigt der Durchflußwiderstand kontinuierlich an ; es bildet sich eine Druckdifferenz zwischen Ringraum I und Ringraum II aus. Nach Erreichen eines vorbestimmten und einstellbaren Belegungsgrades — was einer vorbestimmten Druckdifferenz zwischen Ringraum I und II entspricht — wird der Rückspülvorgang ausgelöst :

Mittels des Motors 16 werden die Kolbenscheiben 11 über die Rutschkupplung 17 und Gewindespindel 13 mit einer vorbestimmten gleichmäßigen Geschwindigkeit über die Innenfläche des Filterkorbes 3 von einer Ruhestellung in die andere Ruhestellung bewegt. Während dieses Durchlaufens bleibt die Filtration aufrecht, es werden lediglich zwei schmale ringförmige Bereiche entsprechend der Stärke der Kolbenscheiben für die Filtration abgedeckt. Da aber im Ringraum II ein höherer Druck als im Durchgangskanal der Kolbenscheiben herrscht, wird ein kleiner Teil der bereits filtrierten Flüssigkeit aus dem Raum II in diesen Durchgangskanal gedrückt, wodurch das Filtermaterial von den angesammelten Feststoffteilchen freigespült wird. Die Rückspülflüssigkeit tritt durch den Ringraum zwischen Zentralrohr 7 und Stützrohr 12 und die Öffnungen 9 in den Innenraum III des Zentralrohres ein und wird von dort über das Ventil 8 abgeleitet.

Je nach Feststoffgehalt der zu filtrierenden Flüssigkeit im Ringraum I wird der vorgegebene maximale Belegungsgrad des Filtermaterials bzw. die Druckdifferenz zwischen I und II nach verschieden langen Zeiträumen erreicht. Geringer Feststoffgehalt ergibt längere Filterstandzeit, ein hoher Gehalt daher eine entsprechend kürzere Filterstandzeit. Die Rückspülung bzw. Reinigung des Filtermaterials erfolgt immer im gleichen Ablauf, d. h. daß sich für eine Reinigung der gesamten Filterfläche immer die gleiche Rückspülmenge ergibt. Ein unterschiedlicher Feststoffgehalt bzw. Verschmutzungsgrad bedingt durch langsameres oder schnelleres Erreichen der vorgegebenen Druckdifferenz eine unterschiedliche Zahl von Rückspülvorgängen, bezogen auf die Menge der zu filtrierenden Flüssigkeit.

Die Steuerung umfaßt gemäß Fig. 4 im wesentlichen die beiden Druckmeßwertaufnehmer 22, 23 mit dem zugehörigen Differenzdruckschalter 24. Bei Erreichen einer bestimmten Druckdifferenz zwischen Ringraum I und Ringraum II — dieser Druckunterschied wird entsprechend den Verfahrensbedingungen gewählt — wird der Motorschalter 25 eingeschaltet und damit der Motor 16 in Betrieb gesetzt. Die Kolbenscheiben werden dadurch von einer Ruhestellung in eine andere Ruhestellung bewegt. Nach Erreichen der neuen Ruhestellung wird über einen Endschalter 18 der Motorschalter 25 wieder ausgeschaltet. Der Druckaufbau erfolgt über eine Förderpumpe 26 in der Zulaufleitung für die zu filtrierende Flüssigkeit (Fig. 4). Die elektrisch leitenden Verbindungen der einzelnen Schaltelemente sind in Fig. 4 als unterbrochene Linie dargestellt.

Überdies kann dank der Unkompliziertheit der für den erfindungsgemäßen Filterapparat benötigten Steuerung der Motorschalter 25 auch von Hand betätigt werden.

Die Perforierungen des Filterkorbes gemäß den Fig. 5 bis 7 sind nach einer bevorzugten Ausgestaltung des erfindungsgemäßen Apparates als konische Bohrungen 27 ausgeführt, bei denen das Verhältnis der Perforierungsdurchmesser an der Innen- und Außenseite des Filterkorbes 3 1 : 2,25 beträgt und wobei sich die Achsen der Bohrungen in einem Abstand a voneinander befinden, der etwa den 2,5-fachen von deren kleinem Durchmesser d an der Innenseite des Filterkorbes entspricht. Die Bohrungen sind gegeneinander versetzt angeordnet, so daß die Öffnungen an der Außenseite des Filterkorbes möglichst dicht nebeneinander zu liegen kommen und deren Flächenanteil an der Gesamt-Mantelfläche des Filterkorbes etwa 70 % ausmacht. Im dargestellten Ausführungsbeispiel (Fig. 5 und 7) entspricht die Wandstärke s des Filterkorbes dem 2,5-fachen von d. Die konischen Bohrungen 27 können auch mit einem kurzen zylindrischen Teil — vorzugsweise an der Innenseite des Filterkorbes — ausgeführt sein, wobei der zylindrische Teil z. B. eine Länge von 0,1 · s aufweist. Der Filterkorb kann aus einem Maschinenrohr einer Wandstärke von ca. 5 mm gefertigt sein.

Den Fig. 8 und 9 ist der Aufbau einer bevorzugten Ausführungsform der Kolbenscheiben mit selbstnachstellenden Kolbenringen genauer zu entnehmen. Jeweils zwei innere und äußere Halteteile (28 bzw. 29) einer Kolbenscheibe 11 sind mittels Schraubbolzen 30 und ringförmiger Distanzstücke 30' aneinander befestigt und nehmen in dem zwischen ihnen freibleibenden ringförmigen Raum einen mit einer Stoßfuge 31 ausgebildeten Kolbenring 32 auf. Der Kolbenring ist jedoch zwischen den Halteteilen nicht fix eingespannt, er weist im Bereich der Stoßfuge Ausnehmungen auf, in welche ein segmentförmiges Paßstück 33 eingesetzt ist. Eine Feder 34, deren Arme in Pfeilrichtung voneinander weg streben, dient zur Vorspannung des geteilten Kolbenringes.

Sobald die Kolbenscheiben aus der Ruhestellung bewegt werden und sich im Bereich des mit konischen Bohrungen 27 versehenen Filterkorbes 3 befinden, wirkt auf die Kolbenringe 32 als zusätzliche Kraft der Differenzdruck zwischen Ringraum I und Ringraum II, wodurch diese Kolbenringe — auch wenn ihre Stärke verschleißbedingt abnimmt — eine gleichbleibende Dichtwirkung und somit minimale Spalt- bzw. Leckverluste gewährleisten. Auch die Paßstücke 33 werden durch die Wirkung der Druckdifferenz gegen den Innenmantel des Filterkorbes 3 gepreßt und stellen die Abdichtung im Bereich der Stoßfuge 31 der Kolbenringe sicher. Da auch zwischen Ringraum I und den Kanälen innerhalb der Kolbenscheiben 11, welche Kanäle wieder über den Raum zwischen Zentralrohr 7 und Stützrohr 12 mit dem Innenraum III des Zentralrohres in Verbindung stehen (Fig. 1), eine Druckdifferenz herrscht, werden Kolbenringe 32 und Paßstücke 33 auch dichtend an die inneren Halteteile 28 gepreßt. Der Flüssigkeitsdruck in Raum III ist geringer als in Raum II und letzterer ist wieder geringer als der im Raum I herrschende Druck.

Mit einem erfindungsgemäßen Filterapparat ist es möglich, die Menge an benötigter Rückspülflüssigkeit im Vergleich zu Apparaten bekannter Bauart bei gleicher durchschnittlicher Porengröße des Filtermaterials und gleicher Durchsatzmenge um bis zu 90 % zu senken.

Ein erfindungsgemäßer Filterapparat kann gewünschtenfalls in Richtung seiner Längsachse zum Filtratauslaß hin leicht geneigt montiert werden. In dieser Aufstellungsart eignet sich der Apparat insbesondere zur Filtration bereits entlüfteter Flüssigkeiten.

## Ansprüche

1. Filterapparat zur Abtrennung von Fest- und Schwebstoffen aus Flüssigkeiten, mit einem zylindrischen Gehäuse (1), einem darin koaxial eingebauten zylindrischen Filterkorb (3) der einen die zu filtrierende Flüssigkeit aufnehmenden Raum gegenüber einem außeren, das Filtrat aufnehmenden Ringraum (II) abgrenzt, und einer mittels eines Antriebes (13) axial beweglichen Rückspülvorrichtung, die zwei in konstantem Abstand angeordnete Kolbenscheiben (11) aufweist, wobei die Kolbenscheiben Kanäle aufweisen, die den äußeren Ringraum (II) über Perforierungen (27) des Filterkorbes (3) mit einem Innenraum (III) eines koaxial zum Filterkorb (3) vorgesehenen Zentralrohres (7) verbinden und die Kolbenscheiben (11) über Dichtungen an der Innenfläche des Filterkorbes (3) anliegen, dadurch gekennzeichnet,

— daß das Zentralrohr (7) im zylindrischen Gehäuse (1) fest angeordnet ist, so daß der die zu filtrierende Flüssigkeit aufnehmende Raum einen Ringraum (I) bildet,

— daß die Kolbenscheiben (11) über Dichtungen an der Außenfläche des Zentralrohres (7) flüssigkeitsdicht anliegen, sowie zur axialen Führung abgestützt sind, und

— daß der Antrieb (13) direkt an mindestens einer der Kolbenscheiben (11) angreift.

2. Filterapparat nach Anspruch 1, dadurch gekennzeichnet, daß der Abstand, in dem die beiden Kolbenscheiben (11) voneinander gehalten sind, etwa der halben Länge des Filterkorbes (3) entspricht.

3. Filterapparat nach den Ansprüchen 1 und 2, dadurch gekennzeichnet, daß die Kolbenscheiben mit kontinuierlichem Vorschub angetrieben sind.

4. Filterapparat nach den Ansprüchen 1 bis 3, dadurch gekennzeichnet, daß die Kolbenscheiben in eine Ruhestellung bewegbar sind, in der die Verbindung zwischen dem Ringraum (II) und

dem Innenraum (III) des Zentralrohres (7) durch nicht perforierte Mantelteile des Filterkorbes (3) unterbrochen ist.

5. Filterapparat nach den Ansprüchen 1 bis 4, dadurch gekennzeichnet, daß die Rückspülphase und damit die Bewegung der Kolbenscheiben aus der Ruhestellung und entlang der Innenseite des Filterkorbes (3) durch eine vorbestimmte Druckdifferenz zwischen äußerem Ringraum (II) und Ringraum (I) auslösbar ist.

6. Filterapparat nach den Ansprüchen 1 bis 5, dadurch gekennzeichnet, daß die Perforierungen (27) des Filterkorbes (3) vom Ringraum (I) zum äußeren Ringraum (II) von innen nach außen divergierend ausgebildet sind.

7. Filterapparat nach Anspruch 6, dadurch gekennzeichnet, daß das Verhältnis der Perforierungsdurchmesser an der Innen- und Außenseite des Filterkorbes (3) etwa 1 : 2,25 beträgt.

8. Filterapparat nach den Ansprüchen 6 und 7, dadurch gekennzeichnet, daß die Achsen der Perforierungen (27) sich in einem Abstand (a) voneinander befinden, der etwa dem 2,5-fachen von deren kleinem Durchmesser (d) an der Innenseite des Filterkorbes (3) entspricht (Fig. 5, 6, 7).

9. Filterapparat nach den Ansprüchen 6 bis 8, dadurch gekennzeichnet, daß der Flächenanteil der Perforierungsöffnungen an der Außenseite des Filterkorbes (3) 65 bis 80 % von dessen Gesamt-Mantelfläche ausmacht.

10. Filterapparat nach den Ansprüchen 6 bis 9, dadurch gekennzeichnet, daß die Wandstärke (s) des Filterkorbes etwa dem 2,5-fachen Durchmesser (d) der Perforierungen an der Innenseite des Filterkorbes (3) entspricht (Fig. 5 und 7).

11. Filterapparat nach den Ansprüchen 1 bis 10, dadurch gekennzeichnet, daß die Kolbenscheiben (11) Kolbenringe (32) aufweisen, auf die der Flüssigkeitsdifferenzdruck zwischen den Ringräumen (I) und (II) wirkt (Fig. 8, 9).

12. Filterapparat nach Anspruch 11, dadurch gekennzeichnet, daß die Kolbenringe (32) zwischen inneren (28) und äußeren (29) Halteteilen einer Kolbenscheibe (11) gehaltert sind (Fig. 8).

13. Filterapparat nach den Ansprüchen 11 und 12, dadurch gekennzeichnet, daß die Kolbenringe (32) mit einer Stoßfuge (31) ausgebildet sind, die Stoßfuge durch ein segmentförmiges Paßstück (33) abgedeckt ist und daß die beiden Stoßenden der Kolbenringe (32) unter Wirkung einer Federkraft voneinander im Abstand gehalten sind (Fig. 9).

14. Filterapparat nach den Ansprüchen 1 bis 13, dadurch gekennzeichnet, daß die Kolbenscheiben (11) durch ein Stützrohr (12), welches das Zentralrohr koaxial umgibt, im Abstand gehalten werden, wobei der Ringraum zwischen Zentralrohr (7) und Stützrohr (12) mit den Kanälen der Kolbenscheiben (11) sowie mit dem Innenraum (III) des Zentralrohres in Verbindung steht.

15. Filterapparat nach den Ansprüchen 1 bis 14, dadurch gekennzeichnet, daß der Antrieb der Kolbenscheiben (11) mittels einer exzentrisch den Ringraum (I) durchsetzenden, von einem Motor (16) angetriebenen Spindel (13) erfolgt.

**Claims**

1. A filtering apparatus for separating solids and suspended particles from liquids, comprising a cylindrical casing (1), a cylindrical filter basket (3) coaxially installed therein and delimiting a space accommodating the liquid to be filtered relative to an outer annular space (II) accommodating the filtrate, and a backflush means axially movable by a drive (13) and provided with two piston disks (11) arranged at a constant distance and including channels connecting the outer annular space (II), via perforations (27) of the filter basket (3), with an inner space (III) of a central tube (7) provided coaxially relative to the filter basket (3), the piston disks (11) abutting on the inner surface of the filter basket (3) via seals, characterised in that

— the central tube (7) is fixedly arranged in the cylindrical casing (1) so that the space accomodating the liquid to be filtered forms an annular space (I),

— the piston disks (11), via seals, abut on the outer surface of the central tube (7) in a liquid-tight manner, and are supported for an axial guidance, and

— the drive (13) directly engages in at least one of the piston disks (11).

2. A filtering apparatus according to claim 1, characterised in that the distance of which the two piston disks (11) are held from each other corresponds to about half the length of the filter basket (3).

3. A filtering apparatus according to claims 1 and 2, characterised in that the piston disks are driven at a continuous advance.

4. A filtering apparatus according to claims 1 to 3, characterised in that the piston disks are movable into a resting position, in which the connection between the annular space (II) and the inner space (III) of the central tube (7) is interrupted by non-perforated jacket parts of the filter basket (3).

5. A filtering apparatus according to claims 1 to 4, characterised in that the backflush phase and thus the movement of the piston disks from the resting position and along the inner side of the filter basket (3) is initiatable by a predetermined pressure difference between the outer annular space (II) and the annular space (I).

6. A filtering apparatus according to claims 1 to 5, characterised in that the perforations (27) of the filter basket (3) are designed so as to diverge outwardly from the interior of the annular space (I) to the outer annular space (II).

7. A filtering apparatus according to claim 6, characterised in that the ratio of the perforation diameters on the inner and outer sides of the filter basket (3) is about 1 : 2.25.

8. A filtering apparatus according to claims 6 and 7, characterised in that the axes of the perforations (27) are at a distance (a) from one another that corresponds to about 2.5 times their smaller diameter (d) on the inner side of the filter basket (3) (Figs. 5, 6, 7).

9. A filtering apparatus according to claims 6 to 8, characterised in that the area portion of the perforation apertures on the outer side of the filter basket (3) amounts to 65 to 80 % of its total jacket area.

10. A filtering apparatus according to claims 6 to 9, characterised in that the wall thickness (s) of the filter basket corresponds to about 2.5 times the diameter (d) of the perforations on the inner side of the filter basket (3) (Figs. 5 and 7).

11. A filtering apparatus according to claims 1 to 11, characterised in that the piston disks (11) comprise piston rings (32), on which the liquid differential pressure between the annular spaces (I) and (II) acts (Figs. 8 and 9).

12. A filtering apparatus according to claim 1, characterised in that the piston rings (32) are held between the inner (28) and outer (29) holding parts of a piston disk (11) (Fig. 8).

13. A filtering apparatus according to claims 11 and 12, characterised in that the piston rings (32) are designed with a joint gap (31), the joint gap is covered by a segment-shaped fitting piece (33) and the two joint ends of the piston rings (32) are held at a distance from each other under the action of a spring force (Fig. 9).

14. A filtering apparatus according to claims 1 to 13, characterised in that the piston disks (11) are held at a distance by a supporting tube (12) coaxially surrounding the central tube, the annular space between the central tube (7) and the supporting tube (12) being in connection with the channels of the piston disks (11) as well as with the inner space (III) of the central tube.

15. A filtering apparatus according to claims 1 to 14, characterised in that the drive of the piston disks is effected by means of a spindle (13) eccentrically penetrating the annular space (I) and driven by a motor (16).

**Revendications**

1. Filtre pour séparer dans des liquides les matières solides et les matières en suspension, comportant un carter cylindrique (1), un panier filtrant (3) cylindrique monté coaxialement dans le carter et limitant un espace, qui reçoit le liquide à filtrer, par rapport à un espace annulaire extérieur (II), qui reçoit le filtrat, et comportant également un dispositif de décolmatage à contre-courant, mobile axialement au moyen d'un mécanisme (13) et présentant deux flasques formant piston (11) disposés à distance constante, étant précisé que les flasques formant piston présentent des canaux qui relient l'espace annulaire extérieur (II), par l'intermédiaire de perforations (27) du panier filtrant (3), à un espace interne (III) d'un tube central (7) prévu coaxialement au panier filtrant (3) et que les flasques formant piston (11) s'appuient, par l'intermédiaire de garnitures d'étanchéité, contre la surface interne du panier filtrant (3), caractérisé en ce que

— le tube central (7) est disposé de façon fixe dans le carter cylindrique (1), de sorte que l'espace qui reçoit le liquide à filtrer forme un espace annulaire (I),

— les flasques formant piston (11) s'appuient, par l'intermédiaire de garnitures d'étanchéité, contre la surface externe du tube central (7), avec étanchéité au liquide, et sont supportés pour être guidés axialement, et

— le mécanisme (13) attaque directement au moins l'un des flasques formant piston (11).

2. Filtre selon la revendication 1, caractérisé en ce que la distance à laquelle les deux flasques formant piston (11) sont maintenus l'un de l'autre correspond à peu près à la demi-longueur du panier filtrant (3).

3. Filtre selon les revendications 1 et 2, caractérisé en ce que les flasques formant piston sont entraînés à vitesse d'avance continue.

4. Filtre selon les revendications 1 à 3, caractérisé en ce que les flasques formant piston peuvent être amenés dans une position de repos dans laquelle la liaison entre l'espace annulaire (II) et l'espace interne (III) du tube central (7) est interrompue par les zones périphériques non perforées du panier filtrant (3).

5. Filtre selon les revendications 1 à 4, caractérisé en ce que la phase de décolmatage par contre courant, et donc le mouvement des flasques formant piston pour quitter la position de repos, le long de la face interne du panier filtrant (3), peut être déclenchée par une pression différentielle prescrite entre l'espace annulaire externe (II) et l'espace annulaire (I).

6. Filtre selon les revendications 1 à 5, caractérisé en ce que les perforations (27) du panier filtrant (3) ont une forme qui va en divergeant de l'intérieur vers l'extérieur, de l'espace annulaire (I) vers l'espace annulaire externe (II).

7. Filtre selon la revendication 6, caractérisé en ce que le rapport des diamètres de perforation sur la face interne et sur la face externe du panier filtrant (3) est d'environ 1/2, 25.

8. Filtre selon les revendications 6 et 7, caractérisé en ce que les axes de perforation (27) se trouvent à une distance (a) l'un de l'autre qui correspond à peu près à 2,5 fois leur petit diamètre (d) sur la face interne du panier filtrant (3) (Fig. 5, 6, 7).

9. Filtre selon les revendications 6 à 8, caractérisé en ce que le pourcentage de surface des ouvertures de perforation sur la face externe du panier filtrant (3) représente de 65 à 80 % de sa surface périphérique totale.

10. Filtre selon les revendications 6 à 9, caractérisé en ce que l'épaisseur de paroi (s) du panier filtrant correspond à peu près à 2,5 fois le diamètre (d) des perforations sur la face interne du panier filtrant (3) (Fig. 5 et 7).

11. Filtre selon les revendications 1 à 10, caractérisé en ce que les flasques formant piston (11) présentent des segments de piston (32) sur lesquels agit la pression différentielle du liquide entre les espaces annulaires (I) et (II) (Fig. 8 et 9).

12. Filtre selon la revendication 11, caractérisé en ce que les segments de piston (32) sont maintenus entre les supports internes (28) et externes (29) d'un flasque formant piston (11) (Fig. 8).

13. Filtre selon les revendications 11 et 12, caractérisé en ce que les segments de piston (32) sont conçus avec un joint d'about (31) ; en ce que ce joint d'about est couvert par une pièce d'ajustement (43) en forme de segment et en ce que les deux extrémités d'about des segments de piston (32) sont maintenus à une certaine distance l'un de l'autre sous l'action d'une force élastique (Fig. 9).

14. Filtre selon les revendications 1 à 13, caractérisé en ce que les flasques formant piston (11) sont maintenus à distance l'un de l'autre par un tube-support (12) qui entoure coaxialement le tube central, étant précisé que l'espace annulaire situé entre le tube central (7) et le tube-support (12) est en liaison avec les canaux des flasques formant piston (11) ainsi qu'avec l'espace interne (III) du tube central.

15. Filtre selon les revendications 1 à 14, caractérisé en ce que l'entraînement des flasques formant piston (11) se fait au moyen d'un arbre (13) traversant excentriquement l'espace annulaire (I) et entraîné par un moteur (16).

Fig. 1

Fig. 2

Fig. 3

Fig.4

Fig. 5

Fig. 6

Fig.7

3

Fig. 8

Fig. 9

4